# EUROPÄISCHE PATENTANMELDUNG

(11) **EP 1 787 860 A1**
(43) Veröffentlichungstag der Anmeldung: **23.05.2007**
(21) Anmeldenummer: 06123209.6
(22) Anmeldetag: 31.10.2006
(51) Int. Cl.: B60Q 9/00, B60Q 3/02

(54) **Vorrichtung zum Steuern von Lichtquellen eines Kraftfahrzeugs sowie Verfahren zur Steuerung einer Ruhebeleuchtungsanlage eines Kraftfahrzeugs**

(30) Priorität: 22.11.2005 DE 102005055476
(71) Anmelder: ROBERT BOSCH GMBH, 70442 Stuttgart (DE)
(72) Erfinder: Schenk, Joachim, 38536, Seershausen (DE)

(57) **Zusammenfassung**

Es wird eine Vorrichtung (10) zum Steuern von Lichtquellen (16, 18) eines Kraftfahrzeugs vorgeschlagen. Hierbei ist ein Sensor (14) vorgesehen, der ein Signal (S) zum Steuern von Außenbeleuchtungsanlagen (16) des Kraftfahrzeugs vermittelt. Erfindungsgemäß ist ein Mittel (12) zum Steuern mindestens einer Ruhebeleuchtungsanlage (16, 18) vorgesehen. Weiterhin wird ein Verfahren zur Steuerung einer Ruhebeleuchtungsanlage (16, 18) mit einem Sensor (14) in einem Kraftfahrzeug vorgeschlagen. Erfindungsgemäß wird die Umgebungshelligkeit durch den Sensor (14) gemessen und die Ruhebeleuchtungsanlage (16, 18) in Abhängigkeit der Umgebungshelligkeit gesteuert.

## Beschreibung

### Stand der Technik

Die Erfindung betrifft eine Vorrichtung zum Steuern von Lichtquellen eines Kraftfahrzeugs sowie ein Verfahren zur Steuerung einer Ruhebeleuchtungsanlage eines Kraftfahrzeugs, nach Gattung der unabhängigen Ansprüche.

Es sind schon zahlreiche Vorrichtungen zum Steuern von Lichtquellen eines Kraftfahrzeugs, beispielsweise aus der DE-A-101 28 995, bekannt. Diese weisen einen Sensor auf, der ein Signal zum Steuern von Außenbeleuchtungseinrichtungen des Kraftfahrzeugs vermittelt. Wird durch den Sensor festgestellt, dass die Lichtverhältnisse in der Umgebung des Kraftfahrzeugs nachlassen, es mithin also dunkler wird, so werden die Scheinwerfer und die Heckbeleuchtung des Kraftfahrzeugs eingeschaltet.

Weiterhin ist bekannt, die Innenraumbeleuchtung als Ruhebeleuchtungsanlage des Kraftfahrzeugs beim Öffnen einer Türe des Kraftfahrzeugs einzuschalten und bis zum Verschließen der Fahrzeugtür eingeschaltet zu lassen, sodass die Fahrzeuginsassen das beleuchtete Fahrzeug verlassen oder betreten können und die Verletzungsgefahr beim Verlassen bzw. Betreten des Kraftfahrzeugs reduziert wird.

### Offenbarung der Erfindung

Die erfindungsgemäße Vorrichtung mit den Merkmalen des Hauptanspruchs hat den Vorteil, dass Mittel zum Steuern der Ruhebeleuchtungsanlage in Abhängigkeit des Signals des Sensors vorgesehen ist. Auf diese Weise kann Energie eingespart werden, was für den Ladezustand der Batterie und deren Haltbarkeit überaus vorteilhaft ist.

Darüber hinaus kann dadurch auch verhindert werden, dass bei schwacher Fahrzeugbatterie ein weiteres Absinken des Ladezustands vermindert wird und gegebenenfalls das Fahrzeug noch gestartet werden kann.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn die Ruhebeleuchtungsanlage zumindest eine Innenraumbeleuchtung des Kraftfahrzeugs umfasst. Diese ist bei ausreichender Umgebungshelligkeit nicht zwingend notwendig und belastet Batterie bzw. Bordnetz des Kraftfahrzeugs.

Umfasst die Ruhebeleuchtungsanlage zumindest ein Parklicht des Kraftfahrzeugs, so wird vorteilhafter Weise weitere Energie eingespart, da auch das Parklicht bei ausreichender Umgebungshelligkeit nicht zwingend notwendig ist.

Besonders vorteilhaft ist es, wenn ein Mittel zur Berücksichtigung des Ladezustands der Spannungsquelle, beispielsweise der Fahrzeugbatterie, vorgesehen ist. Auf diese Weise können die Ruhebeleuchtungsanlagen bei niedrigem Ladezustand der Fahrzeugbatterie ausgeschaltet und bei hohem Ladezustand der Spannungsquelle - auch bei ausreichender Umgebungshelligkeit - eingeschaltet bleiben.

Individuelle Wünsche des Fahrers können in vorteilhafter Weise berücksichtigt werden, wenn eine Steuercharakteristik vorgegeben ist, die vom Fahrer des Kraftfahrzeugs veränderbar ist. Dies kann auch in einer Fahrzeug-Werkstatt, beispielsweise durch einen Werkstatt-Service-Mode geschehen.

Weiterhin ist es vorteilhaft, wenn eine Steuercharakteristik zeitlich veränderbar ist und eine Reset-Funktion aufweist. Auf diese Weise können zeitliche Aspekte berücksichtigt werden und die Steuercharakteristik entsprechend angepasst werden. Darüber hinaus bietet dies den Vorteil, dass die Steuercharakteristik an das Alter der Fahrzeugbatterie angepasst werden kann und beim Austausch der Fahrzeugbatterie lediglich ein Reset durchgeführt werden muss.

Besonders vorteilhaft ist es, wenn eine abschaltbare Antriebseinrichtung zum Antrieb des Kraftfahrzeugs, beispielsweise eine Brennkraftmaschine, vorgesehen ist und der Sensor nach dem Abschalten der Antriebseinrichtung nur für eine vorbestimmbare Zeit aktiv ist. Auf diese Weise kann weitere Energie eingespart werden.

Weiterhin vorteilhaft ist es, wenn der Sensor durch ein Schaltsignal bei ruhender Antriebseinrichtung aktivierbar ist. Auf diese Weise kann der Sensor unabhängig von der Antriebseinrichtung aktiviert werden. Dies kann beispielsweise durch ein Schließsignal der Fahrzeugtüren geschehen, sodass beim Öffnen der Fahrzeugtür der Sensor aktiviert wird, der die Ruhebeleuchtungsanlagen entsprechend steuert.

Das erfindungsgemäße Verfahren mit den Merkmalen des Anspruchs 9 hat den Vorteil, dass die Ruhebeleuchtungsanlage des Kraftfahrzeugs in Abhängigkeit der Umgebungshelligkeit gesteuert wird, wodurch Energie eingespart wird und die Fahrzeugbatterie weniger belastet wird.

### Zeichnungen

Ein Ausführungsbeispiel der Erfindung ist in den Zeichnungen dargestellt und in der nachfolgenden Beschreibung näher erläutert. Es zeigen:
Figur 1 eine schematische Darstellung einer erfindungsgemäßen Vorrichtung und
Figur 2 das erfindungsgemäße Verfahren in einer schematischen Darstellung.

### Beschreibung des Ausführungsbeispiels

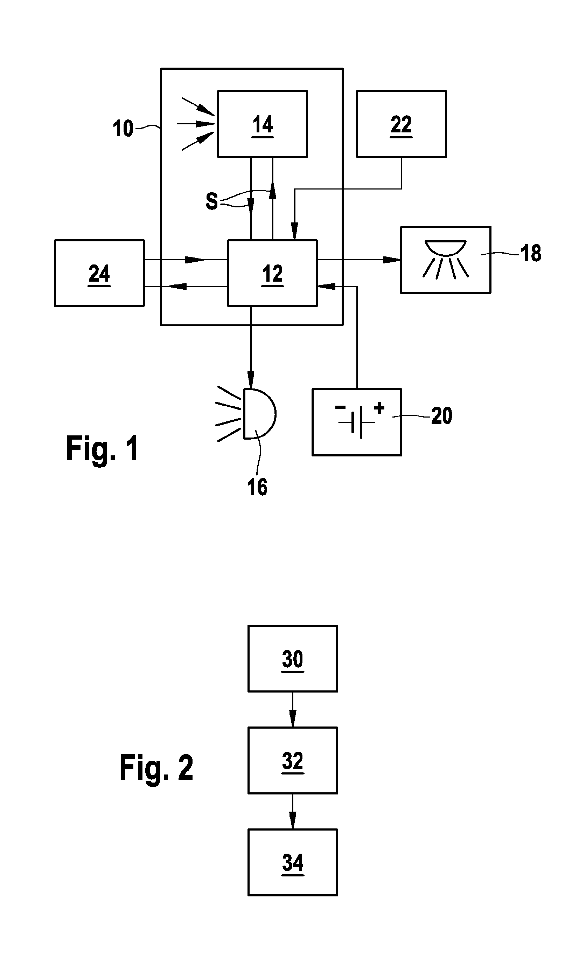

In Figur 1 ist eine erfindungsgemäße Vorrichtung 10 in einer schematischen Darstellung gezeigt. Diese umfasst im Wesentlichen eine Steuerung 12 und einen Sensor 14, der Signale S, die ein Maß für die Umgebungshelligkeit sind, an die Steuerung 12 vermittelt. Mit der Steuerung 12 ist weiterhin ein Fahrzeugscheinwerfer als Außenbeleuchtungsanlage 16 verbunden, die durch Schaltsignale der Steuerung 12 geschaltet werden können. Weiterhin ist mit der Steuerung 12 eine Innenraumbeleuchtung 18 verbunden, die durch Steuersignale der Steuerung 12 geschaltet werden können. Weiterhin werden der Steuerung 12 Ladezustandssignale übermittelt, die den Ladezustand einer Spannungsquelle 20 charakterisieren. Darüber hinaus ist die Steuerung 12 mit einem dritten Schaltsignalgeber 22 verbunden, der beispielsweise das Öffnen oder Schließen des Türschlosses oder ein anderes Steuerungssignal an die Steuerung 12 vermittelt.

Zur Programmierung der Steuerung 12 ist weiterhin eine Ein-/Ausgabeeinrichtung 24 mit der Steuerung 12 verbunden, die beispielsweise ein alphanumerisches Multifunktionsdisplay mit einer Tastatur oder einem anderen Eingabemittel, wie beispielsweise einem Joystick oder einem Steuerknopf, aufweist.

Im Folgenden soll die Funktion der erfindungsgemäßen Steuerung beschrieben werden.

Die Steuerung 12 weist eine Steuercharakteristik auf, die Ruhebeleuchtungseinrichtungen 16, 18, wie beispielsweise das Parklicht 16 oder die Innenraumbeleuchtung 18 eines Kraftfahrzeugs steuert. Dies geschieht in Abhängigkeit der Signale S, die vom Sensor 14 an die Steuerung 12 vermittelt werden. Die Steuercharakteristik kann durch die Ein-/Ausgabesteuerung 24 vom Fahrer des Kraftfahrzeugs verändert werden.

Wird die Zündung des Fahrzeugs ausgeschaltet, mithin die Antriebseinrichtung des Kraftfahrzeugs ausgeschaltet oder eine Türe des Fahrzeugs geöffnet, so wird von der Steuerung 12 das Signal S des Sensors 14 ausgewertet. Bei nicht ausreichender Umgebungshelligkeit, bzw. bei entsprechendem Signal S des Sensors 14, wird die Innenraumbeleuchtung 18 des Kraftfahrzeugs eingeschaltet. Die Fahrzeuginsassen können daraufhin das beleuchtete Fahrzeug verlassen.

Reicht die Umgebungshelligkeit aus, so wird nach Abschalten der Antriebseinrichtung oder nach dem Öffnen der Fahrzeugtüre die Innraumbeleuchtung 18 des Kraftfahrzeugs durch die Steuerung 12 nicht eingeschaltet. In einer Variation der Erfindung kann dieser Vorgang auch in Abhängigkeit des Ladezustands der Spannungsquelle 20 ausgewählt werden. So kann beispielsweise die Innenraumbeleuchtung 18 bei niedriger, nicht ausreichender Umgebungshelligkeit nur dann eingeschaltet werden, wenn der Ladezustand der Spannungsquelle 20 des Kraftfahrzeugs über einem vorbestimmten Ladezustand liegt, um die Spannungsquelle 20 nicht weiter zu belasten. Befindet sich der Ladezustand der Spannungsquelle 20 unterhalb eines bestimmten Werts, wird die Innenraumbeleuchtung 18 daher nach dem Abschalten der Antriebseinrichtung oder dem Öffnen einer Fahrzeugtüre nicht eingeschaltet.

In einer weiteren Variation der Erfindung können auch Außenbeleuchtungseinrichtungen 16, wie beispielsweise das Parklicht als Ruhebeleuchtungsanlage Verwendung finden. So kann die Steuerung 20 das Parklicht 16 bei abgeschalteter Zündung, also bei abgeschalteter Antriebseinrichtung, nur dann einschalten, wenn eine bestimmte Umgebungshelligkeit unterschritten wird. Auch dies kann damit gekoppelt werden, dass der Ladezustand der Spannungsquelle 20 bei der Steuercharakteristik mit berücksichtigt wird. So kann hier beispielsweise das Parklicht 16 nicht eingeschaltet werden, wenn der Ladezustand der Spannungsquelle 20 einen bestimmten Wert unterschreitet.

Darüber hinaus können bei der Steuercharakteristik 12 auch Schaltsignale eines Schaltsignalgebers 22 berücksichtigt werden. Als Schaltsignalgeber können beispielsweise Schaltsignale eines Türschlosses oder eines Zeitgebers berücksichtigt werden. Wird durch den Schaltsignalgeber 22 ein Öffnen der Türschlösser registriert, so kann die Steuerung 12 die Innenraumbeleuchtung 18 und/oder die Außenbeleuchtungseinrichtungen 16 in Abhängigkeit der Signale S des Sensors 14 einschalten, wobei der Sensor 14 erst aktiviert wird, wenn das Schaltsignal des Schaltsignalgebers 22 an die Steuerung 12 vermittelt wird. Diese fragt daraufhin beim Sensor das Signal S als Maß für die Umgebungshelligkeit ab und steuert in Abhängigkeit von diesem Signal S die Innenraumbeleuchtung 18 und schaltet diese bei zu geringer Umgebungshelligkeit ein. Auch hier kann die Steuerung 12 den Ladezustand der Spannungsquelle 20 berücksichtigen, indem die Innenraumbeleuchtung 18 und/oder die Außenbeleuchtungseinrichtungen 16 nur dann eingeschaltet wird, wenn der Ladezustand der Spannungsquelle 20 eine bestimmte vorgegebene Schwelle überschreitet.

Entsprechend kann dies auch für das Parklicht oder sonstige Außenbeleuchtungseinrichtungen 16 des Kraftfahrzeugs verwendet werden. Wird ein Schaltsignal des Türschlosses als Schaltsignalgeber 22 an die Steuerung 12 vermittelt, so kann die Steuerung 12 die Außenbeleuchtungseinrichtungen 16 in Abhängigkeit der Signale des Sensors 14 einschalten. Auch hier kann wiederum der Ladezustand der Spannungsquelle 20 berücksichtigt werden, sodass diese Funktion nur dann aktiviert ist, wenn der Ladezustand der Spannungsquelle 20 einen vorgegebenen Wert übersteigt. Auf diese Weise ist es gewährleistet, dass der Fahrer des Kraftfahrzeugs, wenn er sich dem Kraftfahrzeug nähert, sich bereits in einer beleuchteten Umgebung befindet, wenn die durch den Sensor 14 vermittelte Umgebungsbeleuchtung nicht ausreicht.

Die Steuercharakteristik der Steuerung 12 kann durch die Ein-/ Ausgabeeinrichtung 24 verändert werden. So kann der Fahrer einstellen, ob die Innenraumbeleuchtung 18 in Abhängigkeit von der durch den Sensor 14 vermittelten Umgebungshelligkeit ein- oder ausgeschaltet werden sollen. Das gleiche gilt für die Außenbeleuchtungseinrichtungen 16. Demnach kann der Fahrer hier beispielsweise wählen, ob die Außenbeleuchtungseinrichtungen 16 bei ruhendem Fahrzeug in Abhängigkeit der Umgebungshelligkeit eingeschaltet bzw. ausgeschaltet werden sollen.

In einer weiteren Variation ist es möglich, dass der Fahrer auch über eine Fernsteuerung, die beispielsweise am Fahrzeugschlüssel angebracht ist, die Steuercharakteristik ändert. So kann beispielsweise durch längeres Betätigen eines Tasters verhindert werden, dass sich die Außenbeleuchtungseinrichtungen 16 einschalten, obwohl der Sensor 14 eine sehr niedrige Umgebungshelligkeit vermittelt und der Schaltsignalgeber 22 ein Öffnen der Türen bzw. ein Sichnähern an das Kraftfahrzeug detektiert.

In Figur 2 ist ein Beispiel für ein erfindungsgemäßes Verfahren in einer schematischen Darstellung gezeigt.

In einem ersten Schritt 30 vermittelt der Schaltsignalgeber 22 ein Signal an die Steuerung 12. Dies kann beispielsweise, wie oben bereits beschrieben, das Öffnen des Schlosses der Fahrzeugtür durch eine Funkfernsteuerung sein. In einem zweiten Schritt 32 aktiviert die Steuerung 12 den Sensor 14 und fragt die Umgebungshelligkeit ab, indem es die vom Sensor 14 nach der Aktivierung vermittelten Signale S auswertet. Stellt die Steuerung 12 anhand ihrer Steuercharakteristik fest, dass die Umgebungshelligkeit nicht ausreicht, so werden die Ruhebeleuchtungseinrichtungen 16, 18, also beispielsweise die Innenraumbeleuchtung 18 in einem dritten Schritt 34 aktiviert.

Umgekehrt kann die Steuerung 12 bei ausreichender Umgebungshelligkeit eine Aktivierung der Innenraumbeleuchtung 18 oder anderer Ruhebeleuchtungseinrichtungen verhindern.

In einer Variation der Erfindung fragt die Steuerung 12 den Ladezustand der Spannungsquelle 20 des Kraftfahrzeugs ab und aktiviert die Ruhebeleuchtungseinrichtungen 16, 18 bei mangelnder Umgebungshelligkeit nur dann, wenn der Ladezustand der Spannungsquelle 20 einen vorbestimmten Wert überschreitet.

## Patentansprüche

1. Vorrichtung (10) zum Steuern von Lichtquellen (16, 18) eines Kraftfahrzeugs, mit mindestens einem Sensor (14), der mindestens ein Signal (S) zum Steuern von Außenbeleuchtungsanlagen (16) des Kraftfahrzeugs vermittelt und mit mindestens einer Ruhebeleuchtungsanlage, **dadurch gekennzeichnet, dass** ein Mittel (12) zum Steuern der Ruhebeleuchtungsanlage (16, 18) in Abhängigkeit des Signals (S) vorgesehen ist.

2. Vorrichtung (10) nach Anspruch 1, **dadurch gekennzeichnet, dass** die Ruhebeleuchtungsanlage (16, 18) zumindest eine Innenraumbeleuchtung (18) des Kraftfahrzeugs umfasst.

3. Vorrichtung (10) nach einem der vorhergehenden Ansprüche, **dadurch gekennzeichnet, dass** die Ruhebeleuchtungsanlage (16, 18) zumindest ein Parklicht (16) des Kraftfahrzeugs umfasst.

4. Vorrichtung (10) nach einem der vorhergehenden Ansprüche, **dadurch gekennzeichnet, dass** eine Spannungsquelle (20) mit einem Ladezustand vorgesehen ist und ein Mittel zur Berücksichtigung des Ladezustands vorgesehen ist.

5. Vorrichtung (10) nach einem der vorhergehenden Ansprüche, **dadurch gekennzeichnet, dass** eine Steuercharakteristik vorgegeben ist und vom Fahrer des Kraftfahrzeugs und/oder der Fahrzeug-Werkstatt veränderbar ist.

6. Vorrichtung (10) nach einem der vorhergehenden Ansprüche, **dadurch gekennzeichnet, dass** eine Steuercharakteristik zeitlich veränderbar ist und insbesondere eine Reset-Funktion aufweist.

7. Vorrichtung (10) nach einem der vorhergehenden Ansprüche, **dadurch gekennzeichnet, dass** eine abschaltbare Antriebseinrichtung zum Antrieb des Kraftfahrzeugs vorgesehen ist und der Sensor (14) nach dem Abschalten der Antriebseinrichtung () nur für eine vorbestimmbare Zeit (T) aktiv ist.

8. Vorrichtung (10) nach einem der vorhergehenden Ansprüche, **dadurch gekennzeichnet, dass** eine Antriebseinrichtung zum Antrieb des Kraftfahrzeugs vorgesehen ist und der Sensor (14) durch ein Schaltsignal bei ruhender Antriebseinrichtung aktivierbar ist.

9. Verfahren zur Steuerung einer Ruhebeleuchtungsanlage (16, 18)eines Kraftfahrzeugs **dadurch gekennzeichnet, dass**, die Umgebungshelligkeit durch einen Sensor (14) gemessen wird und die Ruhebeleuchtungsanlage (16, 18) in Abhängigkeit der Umgebungshelligkeit gesteuert werden.
